# DEMANDE DE BREVET EUROPEEN

(11) **EP 2 896 537 A1**
(43) Date de publication de la demande: **22.07.2015**
(21) Numéro de dépôt: 15150875.1
(22) Date de dépôt: 13.01.2015
(51) Int. Cl.: B60S 1/38

(54) **Organe longitudinal de retenue d'une vertèbre de rigidification et/ou de maintien d'une lame d'essuyage pour un balai d'essuie-glace**

(30) Priorité: 17.01.2014 FR 1450409
(71) Demandeur: Valeo Systèmes d'Essuyage, 78321 Le Mesnil Saint Denis (FR)
(72) Inventeur: Cros, Lionel, 63670 La Roche Blanche (FR); Houssat, Stéphane, 63112 Blanzat (FR); Poton, Eric, 63430 Pont du Château (FR); Thebault, Denis, 63000 Clermont Ferrand (FR)
(74) Mandataire: Callu Danseux, Violaine

(57) **Abrégé**

Organe longitudinal (30') de retenue d'une vertèbre de rigidification et de maintien d'une lame d'essuyage pour un balai d'essuie-glace d'une vitre de véhicule, en particulier automobile, ledit organe définissant au moins un logement longitudinal (42') de réception de la vertèbre et au moins un logement longitudinal (32') de réception d'un talon de la lame d'essuyage, au moins l'un desdits logements étant délimité au moins en partie par une paroi de fond (60) et deux parois latérales (62) reliées à ladite paroi de fond, lesdites parois latérales comprenant des faces internes (62a) planes convergeant l'une vers l'autre en s'éloignant de ladite paroi de fond.

## Description

La présente invention concerne un organe longitudinal de retenue d'une vertèbre de rigidification et/ou de maintien d'une lame d'essuyage pour un balai d'essuie-glace d'une vitre de véhicule, en particulier automobile, ainsi qu'un balai d'essuie-glace comportant un tel organe.

Typiquement, un balai d'essuie-glace d'une vitre telle que le pare-brise d'un véhicule automobile comprend un corps longitudinal portant un déflecteur aérodynamique, et des moyens de maintien d'une lame d'essuyage, en général en caoutchouc, destinée à frotter contre la vitre du véhicule pour évacuer de l'eau en l'amenant en dehors du champ de vision du conducteur. Le balai comporte en outre des moyens de retenue d'une vertèbre longitudinale qui rigidifie la lame d'essuyage, de manière à favoriser l'application de cette lame sur le pare-brise. Le balai est porté par un bras qui est entraîné par un moteur dans un mouvement de va-et-vient angulaire. Les moyens de liaison du balai au bras comprennent en général un connecteur qui est solidaire du corps et un adaptateur qui est articulé sur le connecteur et fixé à une extrémité du bras.

Les moyens de maintien de la lame d'essuyage et les moyens de retenue de la vertèbre de rigidification sont en général portés par un organe longitudinal du balai, qui est indépendant du corps du balai et fixé à celui-ci par des moyens appropriés. L'organe définit un premier logement longitudinal de réception de la vertèbre et un second logement longitudinal de réception d'un talon de la lame d'essuyage. Chacun de ces logements est délimité par une paroi de fond, en général horizontale (en position de service), et deux parois latérales, en général verticales, reliées à ladite paroi de fond.

Dans la technique actuelle, les parois latérales (qui ont chacune en section transversale une forme allongée rectiligne) définissant chaque logement, sont parfaitement parallèles. Le logement recevant la vertèbre a une section transversale une forme rectangulaire.

Un problème de la technique actuelle est l'utilisation de vertèbres de sections différentes en fonction de la longueur du balai d'essuie-glace. Afin de garder une uniformité dimensionnelle du logement recevant la vertèbre, il est connu de revêtir les vertèbres présentant les plus petites dimensions d'un revêtement, par exemple en PET, afin de compenser les différences dimensionnelles avec les vertèbres présentant les dimensions standards pour l'insertion dans le logement. Cette solution présente un inconvénient en termes de temps car le revêtement nécessite une étape de fabrication supplémentaire mais représente surtout un coût plus élevé de la vertèbre lié à l'apport supplémentaire de matière.

Il est également connu de disposer sur une face de la vertèbre un film chauffant, sous forme de circuit résistif, afin d'apporter une fonction de chauffage à l'ensemble du balai. L'application de ce film chauffant entraine automatiquement une variation dimensionnelle, en particulier verticale, de la vertèbre en comparaison d'une vertèbre sans film chauffant. Il est alors plus difficile d'insérer la vertèbre équipée du film chauffant dans le logement.

De manière plus générale, la vertèbre est engagée dans le logement avec des jeux transversaux, en particulier horizontaux, pour faciliter son montage par coulissement longitudinal. Cependant, ces jeux persistent après le montage et autorisent des déplacements ou vibrations inutiles de la vertèbre, qui pourraient à termes entraîner une usure précoce de celle-ci ou du logement.

L'invention propose une solution simple, efficace et économique à ces problèmes.

L'invention propose un organe longitudinal de retenue d'une vertèbre de rigidification et de maintien d'une lame d'essuyage pour un balai d'essuie-glace d'une vitre de véhicule, en particulier automobile, ledit organe définissant au moins un premier logement longitudinal de réception de la vertèbre et au moins un deuxième logement longitudinal de réception d'un talon de la lame d'essuyage, au moins l'un desdits premier et deuxième logements étant délimité au moins en partie par une paroi de fond et deux parois latérales reliées, de préférence directement, à ladite paroi de fond, caractérisé en ce que lesdites parois latérales comprennent des faces internes planes convergeant l'une vers l'autre en s'éloignant de ladite paroi de fond.

Dans la présente demande, une section s'entend comme une section transversale à défaut de mention contraire. Dans la description qui suit, on entend par « logement selon l'invention », un logement (de réception d'une vertèbre ou d'un talon de lame d'essuyage) dont les parois latérales comprennent des faces internes planes qui convergent l'une vers l'autre.

On comprend que le logement selon l'invention a ainsi en section transversale, au moins en partie, une forme sensiblement trapézoïdale (et non pas rectangulaire, comme dans la technique antérieure), dont la grande base est située du côté de la paroi de fond. Il est ainsi envisageable de réduire voire de supprimer les jeux précités au montage entre la vertèbre et les parois latérales définissant son logement, et/ou entre le talon de la lame et les parois latérales définissant son logement.

La longueur minimale en section transversale dudit logement selon l'invention peut par exemple être sensiblement égale à la longueur en section transversale de la vertèbre ou du talon de la lame (c'est-à-dire à la largeur de la vertèbre ou du talon). En variante, la longueur en section transversale de la vertèbre ou du talon de la lame est comprise entre la longueur minimale en section transversale dudit logement selon l'invention de l'organe, et la longueur maximale en section transversale de ce logement. Les parois latérales définissant le logement selon l'invention sont alors avantageusement élastiquement déformables, en particulier en flexion. On comprend alors que l'insertion de la vertèbre ou du talon de la lame dans le logement selon l'invention va entraîner une déformation élastique des parois latérales. En position de montage, les parois sont contraintes et prennent appui sur la vertèbre ou le talon, ce qui assure son immobilisation dans le logement selon l'invention.

Un autre avantage de l'invention est de pouvoir monter des vertèbres ou des talons de lames d'essuyage, de différentes longueurs en section transversale, dans un logement selon l'invention d'un même organe longitudinal qui peut ainsi être assimilé à une pièce standardisée.

Par ailleurs, il est avantageux que les faces internes des parois latérales d'un logement soient planes (plutôt que incurvées par exemple) car cela permet de mieux maîtriser, et en particulier de réduire, les jeux entre la vertèbre ou le talon de la lame, et son logement. Par ailleurs, des parois planes permettent de mieux contrôler les bruits transitoires et bruits produits aux points de retournement de la lame d'essuyage (c'est-à-dire aux positions arrêt fixe et opposé arrêt fixe). A contrario, dans le cas de parois latérales du logement de la lame complètement incurvées tel que dans l'art antérieur, une lame d'essuyage de type sapin qui présente un talon de section transversale en forme de T, aura tendance à sortir de son logement et/ou à produire des bruits non désirés.

En section transversale, les parois latérales peuvent avoir une longueur inférieure à celle de la paroi de fond. Selon l'invention, les faces internes des parois latérales sont planes. Les parois latérales peuvent ainsi avoir en section transversale une forme allongée sensiblement rectiligne. Autrement dit, elles n'ont pas une forme incurvée en section transversale.

Dans le cas où la paroi de fond est une paroi inférieure, les faces internes des parois latérales convergent l'une vers l'autre vers le haut, leurs bords longitudinaux supérieurs étant plus proches l'un de l'autre que ne le sont leurs bords longitudinaux inférieurs. La paroi de fond peut être sensiblement plane.

La face latérale interne de chaque paroi latérale est de préférence sensiblement parallèle à une face latérale externe de cette paroi latérale. On comprend ainsi que les faces externes des parois latérales (orientées dans des directions sensiblement opposées) sont planes et convergent également l'une vers l'autre du côté opposé à ladite paroi de fond.

Avantageusement, en section transversale, lesdites faces internes s'étendent sensiblement sur toute la longueur desdites parois latérales.

Les faces internes peuvent former entre elles un angle compris entre 1 et 30°, de préférence entre 1 et 25°, et plus préférentiellement entre 1 et 20°.

Les parois latérales sont de préférence reliées par leurs bords longitudinaux opposés à la paroi de fond à des rebords longitudinaux qui s'étendent sensiblement l'un vers l'autre.

Ces rebords peuvent comporter des faces longitudinales inférieures planes en regard de ladite paroi de fond et qui convergent l'une vers l'autre et vers la paroi de fond.

On comprend ainsi que la hauteur ou la largeur en section transversale du logement selon l'invention varie, celle-ci étant plus importante au niveau des extrémités des rebords reliées aux parois latérales et plus faible au niveau des extrémités libres des rebords.

La largeur minimale en section transversale du logement selon l'invention peut par exemple être sensiblement égale à la largeur en section transversale de la vertèbre ou du talon de la lame (c'est-à-dire à l'épaisseur de la vertèbre ou du talon). En variante, la largeur en section transversale de la vertèbre ou du talon de la lame est comprise entre la largeur minimale en section transversale dudit logement selon l'invention de l'organe, et la largeur maximale en section transversale de ce logement. Les rebords sont alors avantageusement élastiquement déformables, en particulier en flexion. On comprend alors que l'insertion de la vertèbre ou du talon de la lame dans le logement selon l'invention va entraîner une déformation élastique des rebords. En position de montage, les rebords sont contraints et prennent appui sur la vertèbre ou le talon, ce qui assure son immobilisation dans le logement selon l'invention.

La face inférieure de chaque rebord peut être sensiblement parallèle à une face longitudinale supérieure de ce rebord.

Les rebords peuvent avoir en section transversale une forme allongée sensiblement rectiligne.

De préférence, chaque rebord est sensiblement perpendiculaire à la paroi latérale à laquelle il est relié.

Les faces inférieures peuvent former entre elles un angle compris entre 150 et 179°, de préférence entre 155 et 179°, et plus préférentiellement entre 160 et 179°.

L'organe longitudinal peut comprendre des crochets longitudinaux latéraux de fixation configurés pour coopérer avec un corps longitudinal dudit balai, ce corps comportant éventuellement un déflecteur aérodynamique.

En variante, l'organe longitudinal comporte lui-même un déflecteur aérodynamique.

L'organe selon l'invention est de préférence formé d'une seule pièce, en particulier en matériau plastique (tel qu'en polypropylène), par exemple par extrusion. L'organe peut plus préférablement être réalisé à partir d'un ou deux matériaux, notamment à base d'élastomère(s), et par exemple par extrusion ou co-extrusion. Un organe bi-matière peut permettre de faciliter l'optimisation de ses propriétés telles que sa flexibilité. Par exemple, l'organe peut comprendre une partie pour la réalisation du déflecteur plus souple ou moins dure que celle de sa partie permettant la retenue de la vertèbre et/ou le maintien de la lame d'essuyage. La partie supérieure est de préférence suffisamment rigide pour faciliter sa découpe pour former un logement de réception du connecteur du balai, en évitant le risque d'affaissement du corps lors de la réalisation de cette découpe.

L'organe selon l'invention peut présenter un plan longitudinal médian de symétrie.

La présente invention concerne également un ensemble comportant un organe longitudinal tel que décrit ci-dessus, une vertèbre de rigidification et/ou une lame d'essuyage, dans lequel la longueur en section transversale de la vertèbre ou du talon de la lame est comprise entre la longueur minimale en section transversale dudit logement de l'organe à faces internes planes convergentes, et la longueur maximale en section transversale de ce logement.

La présente invention concerne encore un ensemble comportant un organe longitudinal tel que décrit ci-dessus, une vertèbre de rigidification et/ou une lame d'essuyage, dans lequel chacune desdites faces internes planes forme une unique ligne de contact avec ladite vertèbre ou le talon de ladite lame (et non pas une surface de contact comme dans la technique antérieure). Ainsi, en section transversale, chaque face interne plane forme un unique point de contact avec la vertèbre ou le talon de la lame (et non pas une ligne de contact comme dans la technique antérieure).

La présente invention concerne encore un balai d'essuie-glace d'une vitre de véhicule, en particulier automobile, comprenant un organe longitudinal tel que décrit ci-dessus, une lame d'essuyage et une vertèbre de rigidification, ladite vertèbre ou un talon de ladite lame étant reçu dans ledit logement à faces internes planes convergentes.

La présente invention concerne enfin un procédé de fabrication par extrusion d'un organe longitudinal de retenue d'une vertèbre de rigidification et de maintien d'une lame d'essuyage pour un balai d'essuie-glace d'une vitre de véhicule, en particulier automobile, ledit organe définissant au moins un premier logement longitudinal de réception de la vertèbre et au moins un deuxième logement longitudinal de réception d'un talon de la lame d'essuyage, au moins l'un desdits premier et deuxième logements étant délimité au moins en partie par une paroi de fond et deux parois latérales reliées à ladite paroi de fond, lesdites parois latérales ayant en section transversale une forme allongée sensiblement rectiligne, caractérisé en ce que l'organe est réalisé au moyen d'une filière d'extrusion qui est configurée pour que lesdites parois latérales comprennent des faces internes convergeant l'une vers l'autre en s'éloignant de ladite paroi de fond.

Le procédé selon l'invention se distingue de ceux de la technique antérieure essentiellement en ce que la filière d'extrusion est spécifiquement conçue pour réaliser un organe longitudinal selon l'invention.

Les inventeurs ont constaté qu'un affaissement des parois latérales d'un organe longitudinal de balai d'essuie-glace pouvait avoir lieu lors d'une extrusion, menant à des parois latérales dont les faces internes divergent l'une vers l'autre du côté opposé à ladite paroi de fond (bien que la filière d'extrusion ait été conçue pour réaliser des parois latérales parfaitement parallèles). Les faces internes des parois latérales de l'organe selon l'invention sont inclinées de façon contraire, ce qui permet de réduire voire de supprimer les jeux de montage, comme explique dans ce qui précède.

L'invention sera mieux comprise et d'autres détails, caractéristiques et avantages de l'invention apparaîtront à la lecture de la description suivante faite à titre d'exemple non limitatif en référence aux dessins annexés, dans lesquels :
- la figure 1 est une vue en perspective éclatée d'un système d'essuyage selon l'art antérieur,
- la figure 2 est une vue schématique en coupe transversale d'un balai d'essuie-glace selon l'art antérieur,
- la figure 3 est une vue schématique en coupe transversale d'un organe longitudinal pour un balai d'essuie-glace selon l'invention,
- la figure 4 est une vue schématique en coupe transversale d'une variante de réalisation de l'organe longitudinal selon l'invention, et
- les figures 5 à 7 sont des vues schématiques en coupe transversale de variantes de réalisation de l'organe longitudinal selon l'invention.
- les figures 8 à 11 sont des vues schématiques en coupe transversale de variantes de réalisation de l'organe longitudinal selon l'invention.

Il faut noter que les figures exposent l'invention de manière détaillée pour mettre en oeuvre l'invention, lesdites figures pouvant bien entendu servir à mieux définir l'invention le cas échéant.

Dans la description qui suit, les dénominations longitudinales ou latérales se réfèrent à l'orientation du balai d'essuyage selon l'invention. La direction longitudinale correspond à l'axe principal du balai dans lequel il s'étend, alors que les orientations latérales correspondent à des droites concourantes, c'est-à-dire qui croisent la direction longitudinale, notamment perpendiculaires à l'axe longitudinal du balai dans son plan de rotation. Pour les directions longitudinales, les dénominations extérieure ou intérieure s'apprécient par rapport au point de fixation du balai sur un bras porte-balai, la dénomination intérieure correspondant à la partie où le bras et un demi-balai s'étendent. Enfin, les directions référencées comme supérieures ou inférieures correspondent à des orientations perpendiculaires au plan de rotation du balai d'essuyage, la dénomination inférieure contenant le plan du pare-brise.

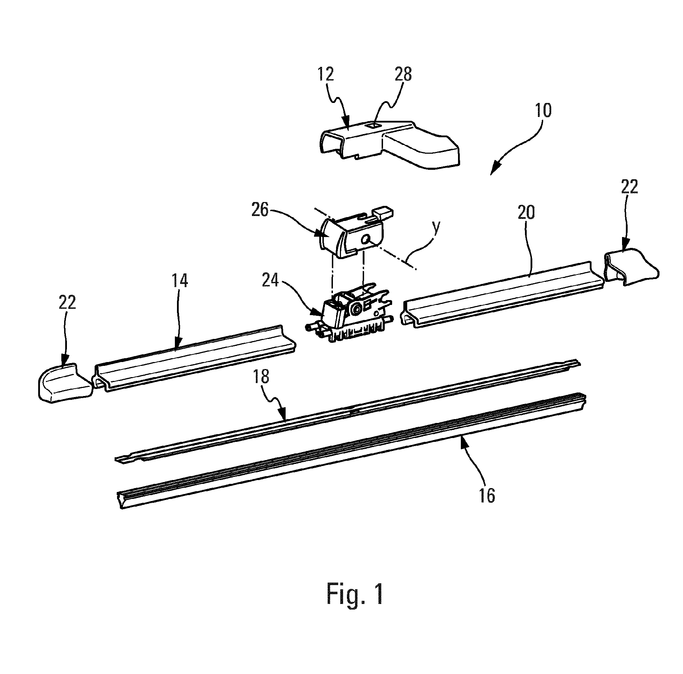

Il est illustré à la figure 1 un système selon l'art antérieur d'essuie-glace d'un pare-brise de véhicule, en particulier automobile. Ce système comprend un balai longitudinal 10 d'essuyage du pare-brise et un bras 12 porte-balai qui est partiellement représenté et destiné à être entraîné par un moteur pour suivre un mouvement angulaire de va-et-vient permettant d'évacuer l'eau et éventuellement d'autres éléments indésirables recouvrant le pare-brise.

Le balai 10 comprend ici un corps longitudinal 14, une lame longitudinale racleuse 16, en général en caoutchouc, et au moins une vertèbre longitudinale 18 qui confère un cintrage à la lame 16 de manière à favoriser l'application de cette lame sur le pare-brise.

Le corps 14 du balai 10 comporte un déflecteur aérodynamique supérieur 20 destiné à améliorer le fonctionnement du système d'essuyage, le but de ce déflecteur 20 étant d'améliorer le plaquage du balai sur le pare-brise et donc la performance aérodynamique du système.

Le balai 10 comprend en outre des embouts ou agrafes d'accrochage 22 de la lame 16 et de la vertèbre 18 sur le corps, ces agrafes 22 étant situées à chacune des extrémités longitudinales du corps 14.

Le corps 14 du balai est ici réalisé en deux parties indépendantes qui sont disposées sensiblement bout à bout et raccordées l'une à l'autre par un connecteur 24 intermédiaire. Ce connecteur 24 est donc intercalé entre les deux parties du corps 14 et comprend des moyens de fixation à ces parties.

Pour assurer son montage sur le bras 12, le balai 10 comprend un adaptateur 26 monté sur le connecteur 24 et permettant une articulation du balai 10 par rapport au bras 12. L'articulation du balai 10 par rapport au bras 12 est une articulation selon un mouvement de rotation autour d'un axe de rotation Y perpendiculaire à l'axe longitudinal du balai 10. Le balai 10 doit en effet présenter au moins un degré de liberté en rotation par rapport au bras 12, et plus spécifiquement par rapport à une pièce terminale 28 du bras 12, pour permettre au balai 10 de suivre la courbure du pare-brise.

L'invention concerne un type particulier de balai d'essuyage selon lequel le balai comprend en outre un organe longitudinal de maintien de la lame et/ou de retenue de la vertèbre.

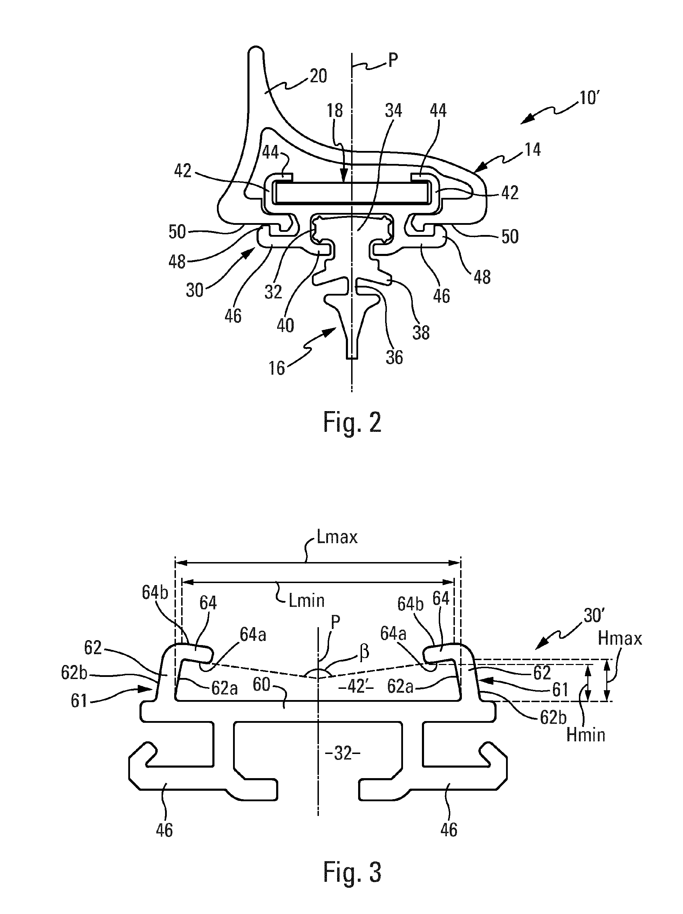

La figure 2 représente un balai d'essuyage 10' de ce type selon la technique antérieure à la présente invention. Les éléments déjà décrits dans ce qui précède sont désignés dans ce qui suit par les mêmes chiffres de référence. Ainsi, les références 14, 16, 18, 20 désignent respectivement le corps, la lame, la vertèbre et le déflecteur du balai 10'.

L'organe de maintien 30 comprend deux crochets longitudinaux latéraux 46. Ces crochets 46 sont sensiblement coplanaires, chaque crochet 46 s'étendant latéralement du côté opposé à l'autre crochet. Le crochet 46 situé à l'avant du balai s'étend ainsi vers l'avant et le crochet 46 situé à l'arrière du balai s'étend vers l'arrière. Chaque crochet 46 comprend à son extrémité libre une dent longitudinale 48 d'accrochage

Le corps 14 du balai comprend à son extrémité inférieure des moyens d'accrochage sur l'organe de maintien 30. Dans l'exemple représenté, le corps 14 comprend deux crochets longitudinaux latéraux 50 qui sont destinés à coopérer avec les crochets 46 de l'organe de maintien.

Les crochets 50 sont sensiblement coplanaires et s'étendent l'un vers l'autre pour définir entre eux une fente dans laquelle peut coulisser et est montée l'organe 30. Le crochet 50 situé à l'avant du balai s'étend ainsi vers l'arrière et le crochet 46 situé à l'avant du balai s'étend vers l'avant. Chaque crochet 50 comprend à son extrémité libre une dent longitudinale 52 d'accrochage destinée à coopérer avec la dent 48 du rebord 46 correspondant de l'organe pour limiter les risques de détachement accidentel du corps vis-à-vis de l'organe.

L'organe 30 du balai 10' comprend un premier logement ou logement supérieur 42 de réception de la vertèbre 18, qui s'étend ainsi au dessus du talon 34 de la lame.

Le logement 42 est configuré pour recevoir par coulissement longitudinal la vertèbre 18. Ce logement 42 est délimité par deux parois latérales dont les extrémités supérieures sont chacune reliées à un rebord longitudinal 44. Ces rebords 44 sont sensiblement coplanaires et s'étendent l'un vers l'autre.

Comme cela est également visible dans le dessin, la vertèbre 18 est montée dans le logement 42 avec des jeux, à la fois en direction horizontale et en direction verticale.

L'organe longitudinal 30 du balai 10' comprend également un deuxième logement ou logement inférieur 32 de réception d'un talon longitudinal 34 de la lame 16. La lame 16 est par exemple du type sapin, bien connue de l'homme du métier. Son extrémité supérieure est reliée par une charnière 36 et un organe d'amortissement 38 au talon 34. De façon connue, en fonctionnement, la lame 16 peut venir en butée sur l'organe 38 qui amortit son retournement vers l'avant ou vers l'arrière.

Le logement 32 est configuré pour recevoir par coulissement longitudinal le talon 34 de la lame 16. Ce logement 32 est délimité par deux parois latérales dont les extrémités inférieures sont chacune reliées à un rebord longitudinal 40. Ces rebords 40 sont sensiblement coplanaires et s'étendent l'un vers l'autre. Ils délimitent entre eux une fente dans laquelle peut coulisser et est montée une partie inférieure amincie du talon 34 qui a une section sensiblement en forme de T.

Comme cela est visible dans le dessin, le talon 34 est monté dans le logement 32 avec des jeux, à la fois en direction horizontale et en direction verticale (le plan longitudinal médian P du balai étant vertical).

Les jeux précités sont néfastes pour les raisons évoquées ci-dessus. Selon l'invention, ces jeux sont diminués voire supprimés en particulier grâce à l'inclinaison de faces internes des parois définissant au moins un des logements précités.

La figure 3 représente un premier mode de réalisation de l'invention, l'invention étant ici appliquée à un organe longitudinal 30' d'un balai d'essuie-glace, de maintien d'une lame d'essuyage et de retenue d'une vertèbre de cintrage, et étant plus particulièrement appliquée au logement 42' de réception de la vertèbre de cet organe.

Toutes les caractéristiques décrites ci-dessus en référence à la figure 2 sont applicables au mode de réalisation de la figure 3 à l'exception de celles concernant le logement supérieur 42. L'organe 30' comprend notamment des crochets longitudinaux latéraux 46 configurés pour coopérer avec un corps longitudinal, tel qu'un corps comportant un déflecteur aérodynamique, comme c'est le cas en figure 2.

Le premier logement ou logement supérieur 42' de réception de la vertèbre s'étend au-dessus du talon de la lame, comme dans la technique antérieure.

Le logement 42' est configuré pour recevoir par coulissement longitudinal la vertèbre. Ce logement 42' est délimité par une paroi horizontale 60 inférieure ou de fond et par deux crochets longitudinaux latéraux 61 qui s'étendent vers le haut depuis la paroi de fond 60.

Ces crochets 61 ont chacun en section une forme sensiblement en L. Chaque crochet 61 comprend une paroi latérale 62 dont le bord longitudinal inférieur est relié à la paroi inférieure 60 et dont le bord longitudinal supérieur est relié à un rebord supérieur 64 orienté vers l'autre crochet 62.

Chaque paroi latérale 62 comprend une face latérale interne plane 62a orientée vers l'autre paroi latérale et une face latérale externe plane 62b orientée dans une direction opposée. Les faces latérales internes 62a s'étendent sensiblement sur toute la hauteur des parois latérales 62 (ou sur toute la longueur de ces parois, lorsque l'on considère une section transversale de ces parois, comme représenté dans les dessins).

De la même façon, chaque rebord supérieur 64 comprend une face inférieure plane 64a orientée vers la paroi de fond 60 et une face supérieure plane 64b orientée dans une direction opposée. Les faces 64a s'étendent sensiblement sur toute la largeur des rebords 64 (ou sur toute la longueur de ces rebords, lorsque l'on considère une section transversale de ces rebords, comme représenté dans les dessins).

Les faces 62a et 62b d'une même paroi latérale 62 sont ici sensiblement parallèles. Les faces 64a et 64b d'un même rebord 64 sont ici sensiblement parallèles. Par ailleurs, les faces 62a et 62b d'une paroi 62 sont sensiblement perpendiculaires aux faces 64a et 64b du rebord 64 relié à cette paroi.

Selon l'invention, les faces 62a convergent l'une vers l'autre en s'éloignant de ladite paroi de fond 60, c'est-à-dire vers le haut. Elles convergent, ce qui signifie qu'elles ne sont pas parallèles et forment au contraire entre elles un angle qui est ici compris entre 1 et 30°. Les faces 62b convergent également l'une vers l'autre vers le haut et forment entre elle un angle qui est ici compris entre 1 et 30°.

Dans l'exemple représenté, les angles d'inclinaison des parois latérales 62 ou de leurs faces 62a, par rapport à la paroi de fond 60, sont sensiblement égaux si bien que les surfaces fictives de prolongement des faces 62a vers le haut se rejoignent sensiblement au niveau du plan médian P de l'organe 30'.

La largeur L ou dimension transversale horizontale entre les faces latérales en regard 62a varie de façon continue en direction verticale, et est maximale (valeur Lmax) au niveau de l'extrémité inférieure des crochets 61 ou parois 62, et minimale (valeur Lmin) au niveau de l'extrémité supérieure des crochets 61 ou parois 62.

Dans l'exemple représenté, les faces 64a convergent l'une vers l'autre et vers la paroi de fond 60, c'est-à-dire vers le bas. Elles ne sont donc pas parallèles et forment au contraire entre elles un angle β qui est ici compris entre 130° et 179°. Les faces 64b convergent également l'une vers l'autre vers le bas et forment entre elle un angle qui est ici compris entre 130 et 179°.

Les angles β d'inclinaison des rebords 64 ou de leurs faces 64a, par rapport à la paroi de fond 60, sont sensiblement égaux si bien que les surfaces fictives de prolongement des faces 64a vers le bas se rejoignent sensiblement au niveau du plan médian P, comme cela est visible sur le dessin.

La hauteur H ou dimension transversale verticale entre les faces inférieures 64a des rebords 64 d'une part et la face supérieure de la paroi de fond 60 d'autre part, varie en direction horizontale, et est minimale (valeur Hmin) au niveau des extrémités libres des rebords 64 et maximale (valeur Hmax) au niveau de leurs extrémités opposées des rebords 64.

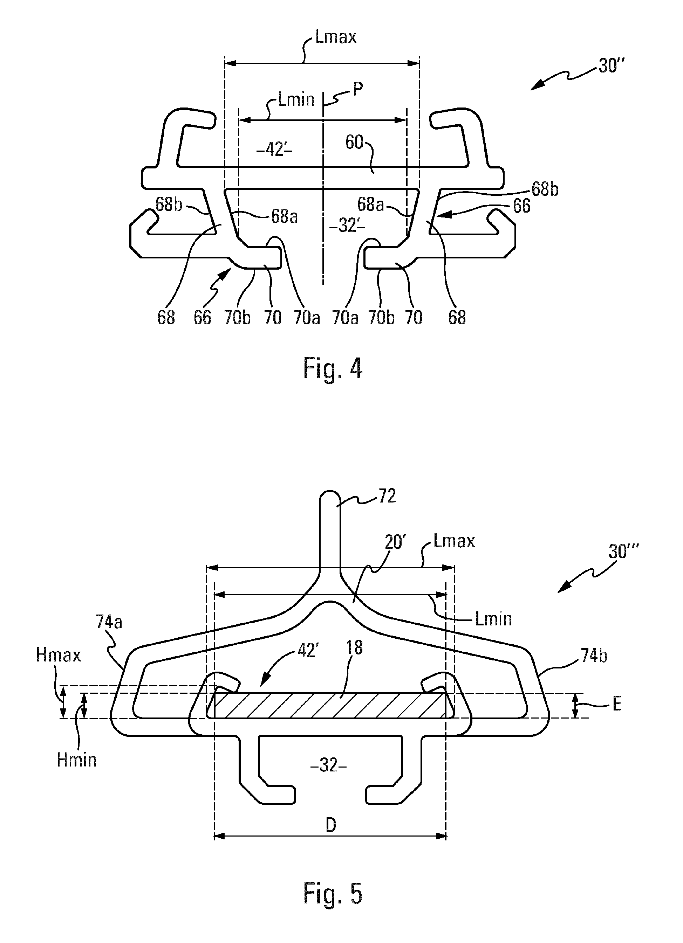

Avantageusement, l'organe 30' selon l'invention est associé à une vertèbre longitudinale de rigidification, dont la largeur (ou longueur en section transversale) est comprise entre Lmin et Lmax, et dont l'épaisseur (ou largeur en section transversale) est comprise entre Hmin et Hmax, comme cela sera expliqué plus en détail dans ce qui suit en référence à la figure 5.

L'organe 30' est ici réalisé en une seule pièce et en un seul matériau (de préférence plastique), par exemple par extrusion. L'organe 30' peut plus préférablement être réalisé à partir d'un ou deux matériaux, notamment à base d'élastomère(s), et par exemple par extrusion ou co-extrusion tel que décrit précédemment.

La figure 4 représente une variante de réalisation de l'invention, l'invention étant ici appliquée à un organe longitudinal 30" d'un balai d'essuie-glace, de maintien d'une lame d'essuyage et de retenue d'une vertèbre de cintrage, et étant plus particulièrement appliquée au logement 32' de réception du talon de la lame de cet organe.

Toutes les caractéristiques décrites ci-dessus en référence aux figures 2 et 3 sont applicables à la variante de réalisation de la figure 4, à l'exception de celles concernant le logement inférieur 32.

Le deuxième logement ou logement inférieur 32' de réception du talon de la lame d'essuyage s'étend ainsi au-dessous de la vertèbre, comme dans la technique antérieure.

Le logement 32' est configuré pour recevoir par coulissement longitudinal le talon de la lame. Ce logement 32' est délimité (au moins en partie) par la paroi horizontale 60 ou de fond et par deux crochets longitudinaux latéraux 66 qui s'étendent vers le bas depuis la paroi de fond 60.

Ces crochets 66 ont chacun en section une forme sensiblement en L. Chaque crochet 66 comprend une paroi latérale 68 dont le bord longitudinal supérieur est relié à la paroi inférieure 60 et dont le bord longitudinal inférieur est relié à un rebord supérieur 70 orienté vers l'autre crochet 66.

Chaque paroi latérale 66 comprend une face latérale interne plane 66a orientée vers l'autre paroi latérale et une face latérale externe plane 66b orientée dans une direction opposée. Les faces latérales internes 66a s'étendent sensiblement sur toute la hauteur des parois latérales 66 (ou sur toute la longueur de ces parois, lorsque l'on considère une section transversale de ces parois, comme représenté dans les dessins).

De la même façon, chaque rebord supérieur 70 comprend une face inférieure plane 70a orientée vers la paroi de fond 60 et une face supérieure 70b orientée dans une direction opposée. Les faces 70a s'étendent sensiblement sur toute la largeur des rebords 70 (ou sur toute la longueur de ces rebords, lorsque l'on considère une section transversale de ces rebords, comme représenté dans les dessins).

Les faces 68a et 68b d'une même paroi latérale 68 sont ici sensiblement parallèles. Les faces 70a et 70b d'un même rebord 64 sont ici sensiblement parallèles. Par ailleurs, les faces 68a et 68b d'une paroi 68 sont sensiblement perpendiculaires aux faces 70a et 70b du rebord 70 relié à cette paroi.

Selon l'invention, les faces 68a convergent l'une vers en s'éloignant de ladite paroi de fond 60, c'est-à-dire vers le bas. Elles convergent, ce qui signifie qu'elles ne sont pas parallèles et forment au contraire entre elles un angle qui est ici compris entre 1 et 30°. Les faces 62b convergent également l'une vers l'autre vers le haut et forment entre elle un angle qui est ici compris entre 1 et 30°.

Dans l'exemple représenté, les angles d'inclinaison des parois latérales 68 ou de leurs faces 68a, par rapport à la paroi de fond 60, sont sensiblement égaux si bien que les surfaces fictives de prolongement des faces 68a vers le bas se rejoignent sensiblement au niveau du plan médian P de l'organe 30".

La largeur L ou dimension transversale horizontale entre les faces latérales en regard 68a varie de façon continue en direction verticale, et est maximale (valeur Lmax) au niveau de l'extrémité supérieure des crochets 61 ou parois 68, et minimale (valeur Lmin) au niveau de l'extrémité inférieure des crochets 66 ou parois 68.

Dans l'exemple représenté, les faces 70a des rebords 70 sont sensiblement parallèles à la paroi de fond 60.

Avantageusement, l'organe 30" selon l'invention est associé à une lame d'essuyage dont le talon a une largeur (ou longueur en section transversale) comprise entre Lmin et Lmax.

On se réfère désormais à la figure 5 qui représente une autre variante de réalisation de l'invention dans laquelle l'organe 30'" est ici formé d'une seule pièce avec un corps 14' comportant un déflecteur aérodynamique 20'.

L'organe 30'" comprend toutes les caractéristiques de l'organe 30' de la figure 3 en relation avec le logement supérieur 42', et toutes les caractéristiques de l'organe 30 de la figure 2 en relation avec le logement inférieur 32.

Le corps 14' a en section une forme présentant sensiblement deux parties, respectivement inférieure et supérieure. La partie supérieure du corps 14' comprend le déflecteur 20'. Ce déflecteur 20' a ici en section une forme de triangle ou de dièdre dont le sommet ou extrémité supérieure est relié à une nervure longitudinale 72 sensiblement verticale. Ce dièdre comprend deux parois latérales inclinées, respectivement avant et arrière, formant un angle de 90° environ.

La partie inférieure du corps 14' est définit par deux parois latérales, respectivement avant 74a et arrière 74b, qui ont chacune en section une forme sensiblement en C. L'ouverture du C d'une paroi 74a, 74b étant orientée vers l'autre paroi 74b, 74a. Chaque paroi 74a, 74b comprend un bord longitudinal supérieur reliée à un bord longitudinal inférieur du dièdre de la partie supérieure du corps, et un bord longitudinal inférieur qui est relié à l'organe 30"'. Chaque paroi 74a, 74b définit une cavité longitudinale qui s'étend le long d'un côté de l'organe 30"'.

Le corps 14' et l'organe 30'" sont formés d'une seule pièce, par exemple par extrusion, à partir de deux matériaux différents, un premier matériau pour le corps 14' et un second matériau pour l'organe 30"'. Les zones de liaison entre les deux matériaux sont ici situées entre les bords longitudinaux inférieurs des parois 74a, 74b et l'organe 30"'.

Une vertèbre de rigidification 18 est montée dans le premier logement 42' de l'organe 30"'. Comme indiqué dans ce qui précède, cette vertèbre 18 a une largeur D (ou longueur en section transversale) qui est comprise entre la Lmin et Lmax, et une épaisseur E (ou largeur en section transversale) qui est comprise entre Hmin et Hmax.

Ainsi, l'insertion de la vertèbre 18 par coulissement dans le logement 42' (la vertèbre 18 pouvant comprendre à ses extrémités longitudinales des chanfreins d'entrée pour faciliter cette insertion) entraîne une déformation élastique des crochets 61 (et en particulier de leurs parois 62 et de leurs rebords 64) qui vont s'écarter l'un de l'autre. Dans la position de montage de la vertèbre telle que représentée en figure 5, les parois latérales 62 prennent appui par les extrémités supérieures de leurs faces internes 62a sur la vertèbre, et les crochets 64 prennent appui par les extrémités libres de leurs faces inférieures 64a sur la vertèbre. Ces appuis suppriment localement les jeux horizontaux et verticaux entre l'organe et la vertèbre et assurent donc un bon maintien de celle-ci en l'empêchant de se déplacer en fonctionnement.

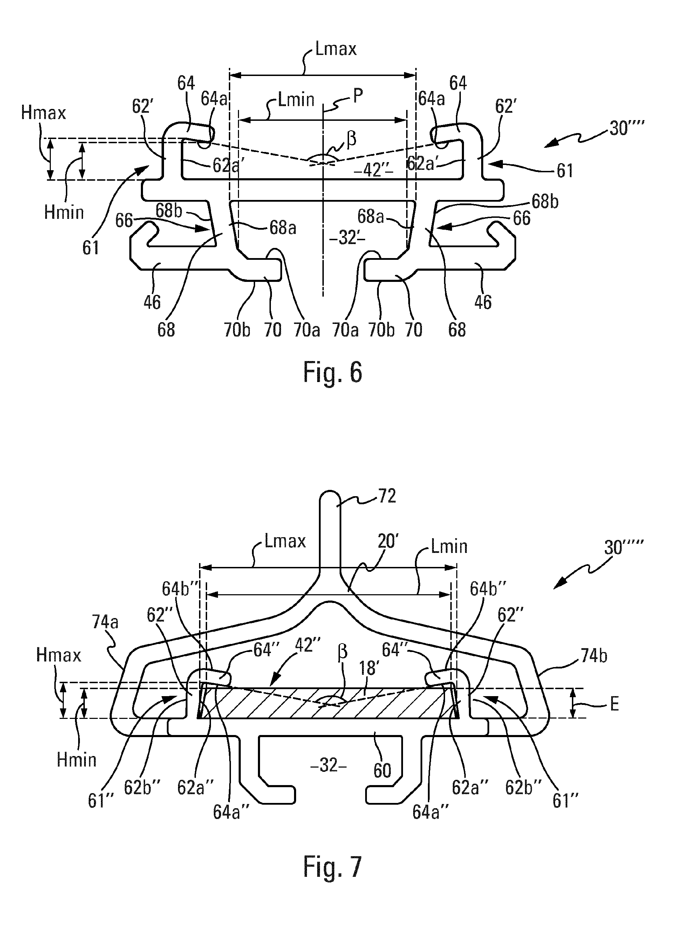

On se réfère désormais à la figure 6 qui représente une variante de réalisation de l'invention qui diffère du mode de réalisation de la figure 4 essentiellement en ce que les parois latérales 62' du logement 42" de la vertèbre sont parallèles. Les faces internes 62a' des parois latérales 62' sont donc parallèles entre elles.

Comme c'est le cas en figure 4, les rebords 64 ont leurs faces 64a qui convergent l'une vers l'autre et vers la paroi de fond 60, c'est-à-dire vers le bas. Elles ne sont donc pas parallèles et forment au contraire entre elles un angle β qui est ici compris entre 130° et 179°. Les faces 64b convergent également l'une vers l'autre vers le bas et forment entre elle un angle qui est ici compris entre 130 et 179°.

Les angles β d'inclinaison des rebords 64 ou de leurs faces 64a, par rapport à la paroi de fond 60, sont sensiblement égaux si bien que les surfaces fictives de prolongement des faces 64a vers le bas se rejoignent sensiblement au niveau du plan médian P, comme cela est visible sur le dessin.

La hauteur H ou dimension transversale verticale entre les faces inférieures 64a des rebords 64 d'une part et la face supérieure de la paroi de fond 60 d'autre part, varie en direction horizontale, et est minimale (valeur Hmin) au niveau des extrémités libres des rebords 64 et maximale (valeur Hmax) au niveau de leurs extrémités opposées des rebords 64.

Avantageusement, l'organe 30"" selon l'invention est associé à une vertèbre longitudinale de rigidification, dont l'épaisseur (ou largeur en section transversale) est comprise entre Hmin et Hmax.

Le logement 32' et les crochets 66 de l'organe 30"" sont identiques à ceux de l'organe 30" de la figure 4.

L'organe 30"" est ici réalisé en une seule pièce et en un seul matériau (de préférence plastique), par exemple par extrusion.

On se réfère désormais à la figure 7 qui représente une variante de réalisation de l'invention qui diffère du mode de réalisation de la figure 5 essentiellement en ce que les parois latérales 62" du logement 42'" ont leurs faces externes 62b" qui sont sensiblement parallèles, alors que leurs faces internes 62a" convergent l'une vers l'autre en s'éloignant de la paroi de fond 60. Les faces interne 62a" et externe 62b" d'une même paroi latérale 62" ne sont donc pas parallèles entre elles.

Les faces 62a" convergent l'une vers l'autre vers le haut et forment entre elle un angle qui est ici compris entre 1 et 30°.

Dans l'exemple représenté, les angles d'inclinaison des parois latérales 62" ou de leurs faces 62a", par rapport à la paroi de fond 60, sont sensiblement égaux si bien que les surfaces fictives de prolongement des faces 62a" vers le haut se rejoignent sensiblement au niveau du plan médian P de l'organe 30""'.

La largeur L ou dimension transversale horizontale entre les faces latérales en regard 62a" varie de façon continue en direction verticale, et est maximale (valeur Lmax) au niveau de l'extrémité inférieure des crochets 61" ou parois 62", et minimale (valeur Lmin) au niveau de l'extrémité supérieure des crochets 61" ou parois 62".

Dans l'exemple représenté, les faces 64a" convergent l'une vers l'autre et vers la paroi de fond 60, c'est-à-dire vers le bas. Elles ne sont donc pas parallèles et forment au contraire entre elles un angle β qui est ici compris entre 130° et 179°. Les faces 64b" convergent également l'une vers l'autre vers le bas et forment entre elle un angle qui est ici compris entre 130 et 179°.

Les angles β d'inclinaison des rebords 64" ou de leurs faces 64a", par rapport à la paroi de fond 60, sont sensiblement égaux si bien que les surfaces fictives de prolongement des faces 64a" vers le bas se rejoignent sensiblement au niveau du plan médian P, comme cela est visible sur le dessin.

La hauteur H ou dimension transversale verticale entre les faces inférieures 64a" des rebords 64" d'une part et la face supérieure de la paroi de fond 60 d'autre part, varie en direction horizontale, et est minimale (valeur Hmin) au niveau des extrémités libres des rebords 64" et maximale (valeur Hmax) au niveau de leurs extrémités opposées des rebords 64".

Avantageusement, l'organe 30""' selon l'invention est associé à une vertèbre longitudinale 18' de rigidification qui a en section transversale une forme sensiblement trapézoïdale. La vertèbre 18' a une largeur (ou longueur en section transversale) minimale (à son extrémité supérieure correspondant à la petite base du trapèze) sensiblement égale à Lmin et une largeur maximale (à son extrémité inférieure correspondant à la grande base du trapèze) sensiblement égale à Lmax. La vertèbre 18' a une épaisseur (ou largeur en section transversale) comprise entre Hmin et Hmax.

L'organe 30""' est ici réalisé en une seule pièce et en un seul matériau (de préférence plastique), par exemple par extrusion.

Dans tous les exemples de réalisation de l'invention décrits dans ce qui précède, on constate qu'en section transversale chaque face interne 62a, 62a', 62a", 68a forme un unique point de contact avec la vertèbre ou le talon de la lame (et non pas une ligne de contact comme dans la technique antérieure).

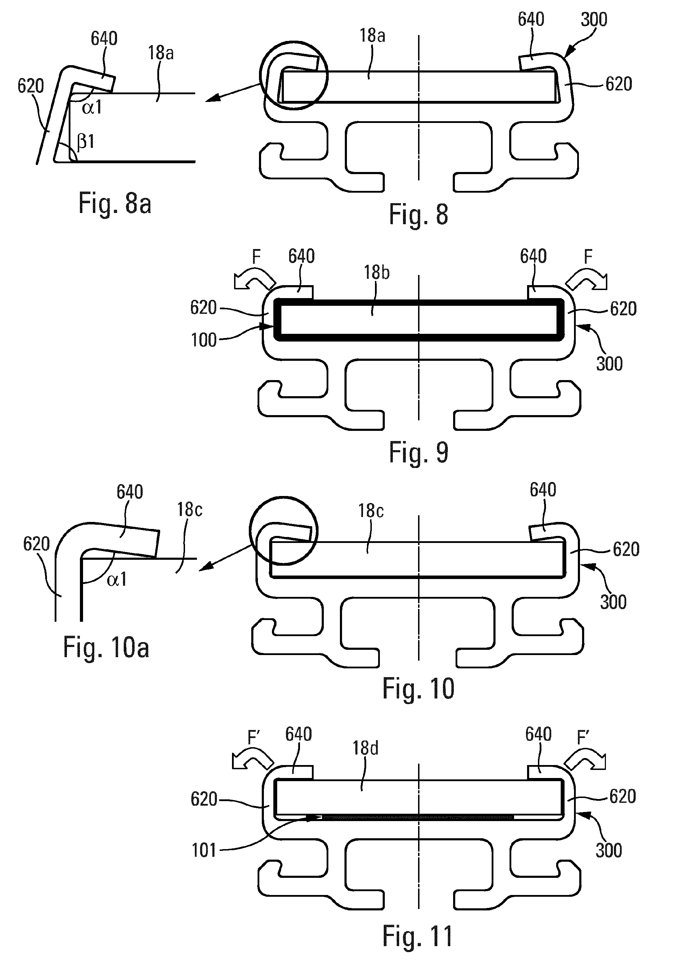

Les figures 8 à 11 représentent un même organe longitudinal 300 dans lequel se trouve à chaque fois une vertèbre différente. Les éléments déjà décrits dans les figures précédentes ne sont pas désignés, seules les différences notables seront décrites en lien avec ces figures.

En référence à la figure 8, il est inséré dans l'organe longitudinal 300 une vertèbre 18a sans revêtement particulier et de dimension classique, par exemple 10,1 mm x 1,02 mm. A cet effet, les faces 620 convergent l'une vers l'autre en s'éloignant de la paroi de fond, c'est-à-dire vers le haut.

Ce mode de réalisation se rapproche sensiblement du mode de réalisation décrit en figure 3 et permet ainsi de loger une vertèbre 18a dans un organe longitudinal 300 sans jeu, grâce à la convergence des parois 620 qui permettent de supprimer le jeu latéral de la vertèbre 18a dans l'organe longitudinal 300.

En variante, à la figure 9, il est inséré dans le même organe longitudinal 300 qu'à la figure précédente, une vertèbre 18b, à la différence que cette vertèbre 18b est revêtue d'une couche 100 de PET. Ainsi la vertèbre 18b présente des dimensions supérieures à la vertèbre 18a de la figure 8, par exemple 10,3 mm x 1,25 mm. Nous notons qu'avec cette vertèbre 18b, il n'existe plus d'espace libre entre les faces 620 et la vertèbre 18b. En position finale de montage de la vertèbre 18b dans le logement de l'organe longitudinal 300, les faces 620 ne convergent plus l'une vers l'autre en s'éloignant de la paroi de fond mais sont sensiblement parallèles. La vertèbre 18b étant plus large que la vertèbre 18a, les parois 620 sont repoussées vers l'extérieur selon la flèche F. En d'autres termes, lors de l'insertion de la vertèbre 18b dans le logement de l'organe longitudinal 300, les parois 620 s'éloignent de la paroi de fond par rapport à leur position de la figure 8.

Un même organe longitudinal (figure 8 et figure 9) 300 permet ainsi de loger au moins deux types de vertèbres (18a, 18b) ayant des dimensions différentes.

En figure 8a est représenté une vue spécifique des points de contact entre la vertèbre 18a et l'organe longitudinale 300.

Afin d'être plus facilement adaptable à différentes dimensions de vertèbres, l'organe longitudinal 300 présente préférablement un angle α1 entre la paroi latérale 620 et la paroi de rebord 640 d'approximativement 15°.

Un angle β1 défini entre la paroi latérale 620 et la paroi de fond sera quand à lui variable en fonction des différentes vertèbres.

De manière préférable, nous pouvons définir l'angle β1 par la relation suivante : angle β1 = arctan (hauteur de vertèbre / largeur de vertèbre).

A titre d'exemple, le tableau ci-dessous nous indique une valeur de l'angle β1 en fonction des dimensions des différentes vertèbres.

| Largeur de vertèbre | Hauteur de vertèbre | Angle β1 |
|---|---|---|
| 10,3 mm | 1,25 mm | 90° |
| 10,1 mm | 1,2 mm | 84,4° |
| 9,2 mm | 1,15 mm | 64,4° |
| 9 mm | 1 mm | 57° |

En référence à la figure 10, il est inséré dans l'organe longitudinal 300 une vertèbre 18c sans revêtement particulier et de dimension classique, par exemple 10,3 mm x 1,2 mm. En position finale de montage de la vertèbre 18c dans l'organe longitudinal 300, les faces 620 ne convergent plus l'une vers l'autre en s'éloignant de la paroi de fond mais sont sensiblement parallèles. A la différence de la figure 9, il existe un espace entre la paroi de rebord 640 et la vertèbre 18c. Comme visible en figure 10a, cet espace existe grâce à l'angle α d'approximativement 15° entre la paroi latérale 620 et la paroi de rebord 640.

L'organe longitudinal 300 de la figure 10 permet de loger une vertèbre ayant une largeur sensiblement égale à la vertèbre 18b de la figure 9 mais ayant une hauteur inferieure, le tout en évitant un déplacement relatif entre la vertèbre 18c et l'organe longitudinal 300 grâce à la pression de la paroi de rebord 64a sur la vertèbre 18c.

A la différence de la figure 10, nous pouvons noter que sur la face inferieure de la vertèbre 18d de la figure 11 est disposé un film chauffant 101. La face inferieure de la vertèbre 18d est considérée comme la face en regard avec la paroi de fond. Le film ayant une épaisseur définie, cette épaisseur permet de compenser l'espace visible en figure 10 entre la paroi de rebord 640 et la vertèbre 18c. Ainsi, la vertèbre 18d étant plus haute que la vertèbre 18c, les parois de rebord 640 sont repoussées vers l'extérieur selon la flèche F'. En d'autres termes, lors de l'insertion de la vertèbre 18d dans le logement de l'organe longitudinal 300, les parois 640 s'éloignent de la paroi de fond par rapport à leur position de la figure 10.

Un même organe longitudinal (figure 10 et figure 11) 300 permet ainsi de loger au moins deux types de vertèbres (18c, 18d), l'une classique ou l'autre ayant un film chauffant, tout en ayant un maintien optimal.

La présente invention concerne également un procédé de fabrication par extrusion d'un organe longitudinal 30', 30", 30"', 30"", 30""', 300 tel que décrit dans ce qui précède. Pour cela, l'organe 30', 30", 30"', 30"", 30""', 300 est réalisé au moyen d'une filière d'extrusion qui est configurée pour que lesdites parois latérales 62, 62', 62", 68, 620 comprennent des faces internes 62a, 62a', 62a", 68a planes qui convergent l'une vers l'autre en s'éloignant de la paroi de fond 60.

Comme cela est représenté en figure 1, l'organe 30', 30", 30"', 30"", 30""', 300 selon l'invention peut être associé, en plus d'une vertèbre 18, d'une lame 16, et éventuellement d'un corps 14 (si celui-ci n'est pas déjà intégré à l'organe, comme c'est le cas de l'organe 30'" de la figure 5), à un connecteur 24 et à des embouts d'extrémité 22 du balai d'essuie-glace. L'organe 30', 30", 30"', 30"", 30""', 300 peut en outre comprendre des moyens de circulation d'un liquide lave-glace et/ou des moyens de chauffage du balai et/ou dudit liquide.

## Revendications

1. Organe longitudinal (30', 30", 30"', 30"", 30""', 300) de retenue d'une vertèbre de rigidification (18) et de maintien d'une lame d'essuyage (16) pour un balai d'essuie-glace d'une vitre de véhicule, en particulier automobile, ledit organe définissant au moins un premier logement longitudinal (42') de réception de la vertèbre et au moins un deuxième logement longitudinal (32') de réception d'un talon (34) de la lame d'essuyage, au moins l'un desdits premier et deuxième logements étant délimité au moins en partie par une paroi de fond (60) et deux parois latérales (62, 68, 620) reliées à ladite paroi de fond, **caractérisé en ce que** lesdites parois latérales comprennent des faces internes (62a, 68a) planes convergeant l'une vers l'autre en s'éloignant de ladite paroi de fond.

2. Organe longitudinal (30', 30", 30"', 30"", 30""', 300) selon la revendication 1, dans lequel la face interne (62a, 68a) de chaque paroi latérale (62, 68, 620) est sensiblement parallèle à une face externe (62b, 68b) de cette paroi latérale.

3. Organe longitudinal (30', 30", 30"', 30"", 30""', 300) selon la revendication 1 ou 2, dans lequel, en section transversale, lesdites faces internes (62a, 68a) s'étendent sensiblement sur toute la longueur desdites parois latérales (62, 68, 620).

4. Organe longitudinal (30', 30", 30"', 30"", 30""', 300) selon l'une des revendications précédentes, dans lequel lesdites faces internes (62a, 68a) forment entre elles un angle compris entre 1 et 30°, de préférence entre 1 et 25°, et plus préférentiellement entre 1 et 20°.

5. Organe longitudinal (30', 30", 30"', 30"", 30""', 300) selon l'une des revendications précédentes, dans lequel les parois latérales (62, 68) sont reliées par leurs bords longitudinaux opposés à la paroi de fond (60) à des rebords longitudinaux (64, 70, 640) qui s'étendent sensiblement l'un vers l'autre.

6. Organe longitudinal (30', 30", 30"', 30"", 30""', 300) selon la revendication 5, dans lequel lesdits rebords (64, 70, 640) comportent des faces longitudinales inférieures (64a, 70a) planes en regard de ladite paroi de fond (60) et qui convergent l'une vers l'autre et vers la paroi de fond.

7. Organe longitudinal (30', 30", 30"', 30"", 30""', 300) selon la revendication 6, dans lequel ladite face inférieure (64a, 70a) de chaque rebord (64, 70, 640) est sensiblement parallèle à une face longitudinale supérieure (64b, 70b) de ce rebord.

8. Organe longitudinal (30', 30", 30"', 30"", 30""', 300) selon l'une des revendications 5 à 7, dans lequel lesdits rebords (64, 70, 640) ont en section transversale une forme allongée sensiblement rectiligne.

9. Organe longitudinal (30', 30", 30"', 30"", 30""', 300) selon l'une des revendications 5 à 8, dans lequel chaque rebord (64, 70) est sensiblement perpendiculaire à la paroi latérale (62, 68) à laquelle il est relié.

10. Organe longitudinal (30', 30", 30"', 30"", 30""', 300) selon l'une des revendications 5 à 9, dans lequel lesdites faces inférieures (64a, 70a) forment entre elles un angle (β) compris entre 150 et 179°, de préférence entre 155 et 179°, et plus préférentiellement entre 160 et 179°.

11. Organe longitudinal (30', 30", 30"', 30"", 30""', 300) selon l'une des revendications précédentes, dans lequel il comprend des crochets longitudinaux latéraux (46) de fixation configurés pour coopérer avec un corps longitudinal (14) dudit balai, ce corps comportant éventuellement un déflecteur aérodynamique (20).

12. Organe longitudinal (30', 30", 30"', 30"", 30""', 300) selon l'une des revendications 1 à 11, comportant un déflecteur aérodynamique (20').

13. Ensemble comportant un organe longitudinal (30', 30", 30"', 30"", 30""', 300) selon l'une des revendications précédentes, une vertèbre de rigidification (18) et/ou une lame d'essuyage (16), dans lequel la longueur (D) en section transversale de la vertèbre ou du talon (34) de la lame est comprise entre la longueur minimale (Lmin) en section transversale dudit logement (42', 32') de l'organe à faces internes planes convergentes, et la longueur maximale (Lmax) en section transversale de ce logement.

14. Ensemble comportant un organe longitudinal (30', 30", 30"', 30"", 30""', 300) selon l'une des revendications 1 à 12, une vertèbre de rigidification (18) et/ou une lame d'essuyage (16), dans lequel chacune desdites faces internes (62a, 68a) planes forme une unique ligne de contact avec ladite vertèbre ou le talon de ladite lame, de préférence avec ladite vertèbre.

15. Balai d'essuie-glace d'une vitre de véhicule, en particulier automobile, comprenant un organe longitudinal (30', 30", 30"', 30"", 30""', 300) selon l'une quelconque des revendications 1 à 12, une lame d'essuyage (16) et une vertèbre de rigidification (18), ladite vertèbre ou un talon (34) de ladite lame étant reçu dans ledit logement (42', 32') à faces internes planes convergentes.

16. Procédé de fabrication par extrusion d'un organe longitudinal (30', 30", 30"', 30"", 30""', 300) de retenue d'une vertèbre de rigidification (18) et de maintien d'une lame d'essuyage (12) pour un balai d'essuie-glace d'une vitre de véhicule, en particulier automobile, ledit organe définissant au moins un premier logement longitudinal (42') de réception de la vertèbre et au moins un deuxième logement longitudinal (32') de réception d'un talon (34) de la lame d'essuyage, au moins l'un desdits premier et deuxième logements étant délimité au moins en partie par une paroi de fond (60) et deux parois latérales (62, 68, 620) reliées à ladite paroi de fond, **caractérisé en ce que** l'organe est réalisé au moyen d'une filière d'extrusion qui est configurée pour que lesdites parois latérales comprennent des faces internes (62a, 68a) planes convergeant l'une vers l'autre en s'éloignant de ladite paroi de fond.
